# EUROPÄISCHE PATENTSCHRIFT

(11) **EP 1 475 510 B1**
(45) Veröffentlichungstag und Bekanntmachung des Hinweises auf die Patenterteilung: **22.12.2010**
(21) Anmeldenummer: 04009083.9
(22) Anmeldetag: 16.04.2004
(51) Int. Cl.: E21B 10/44, B23B 51/00

(54) **Bohrer**
Drill
Foret

(30) Priorität: 09.05.2003 DE 10321078; 17.09.2003 DE 10342817
(43) Veröffentlichungstag der Anmeldung: 10.11.2004
(73) Patentinhaber: ROBERT BOSCH GMBH, 70442 Stuttgart (DE)
(72) Erfinder: Moser, Bernhard, 88361 Altshausen (DE)

(56) Entgegenhaltungen:
- US-A- 4 210 215
- US-A1- 2001 013 429
- US-A1- 2001 023 783
- US-A1- 2002 053 472

## Beschreibung

Die Erfindung betrifft einen Bohrer, insbesondere für Drehschlag- und Hammerbohrmaschinen, mit einem Bohrerkopf, einem ein- oder mehrgängigen Wendelschaft mit mindestens einer Bohrmehlnut und einem Einspannende, wobei die Bohrmehlnut in Axialrichtung von wenigstens einem wendelförmig um die Achse des Bohrers umlaufenden Steg begrenzt ist, wobei die Bohrmehlnut einen ersten Abschnitt und, einen zweiten Abschnitt aufweist, wobei wenigstens einer der Abschnitte der Bohrmehlnut eine als Erhöhung ausgebildete Verformung als Zusatzförderwendel aufweist, welche wenigstens eine als zusätzliche Bohrmehltragfläche ausgebildete Förderflanke für Bohrmehl bildet. Aus US 2001/0013429 A1 ist ein Bohrer dieser Art bekannt.

Ein weiterer Bohrer ist aus der DE 27 35 227 A1 benannt. Hinsichtlich der Förderleistung stößt die in der DE 27 35 227 A1 beschriebene Bohrmehlnut aufgrund der höheren Leistungsfähigkeit moderner Bohrerköpfe an ihre Grenzen, so dass das Bohrmehl die Bohrmehlnut beim Bohrvorgang vollständig anfüllt und in der oberen Hälfte der Nut aufgrund der fehlenden Förderung hoch verdichtet wird. Dies führt beim Auftritt des Bohrmehls aus dem Bohrloch zu ungewünschten Verpuffungen des sich explosionsartig entspannenden Bohrmehls.

Der Erfindung liegt die Aufgabe zugrunde, die Förderleistung der Bohrmehlnut zu steigern.

Diese Aufgabe wird durch die Merkmale des Anspruchs 1 gelöst.

Durch die in den Unteransprüchen genannten Merkmale sind weitere vorteilhafte Ausführungen und Weiterbildungen der Erfindung möglich.

Der erfindungsgemäße Bohrer weist wenigstens eine Bohrmehlnut auf, auf welcher in einem ersten und/oder zweiten Abschnitt wenigstens eine Erhöhung oder Vertiefung als zusatzwendel angeordnet ist, durch welche wenigstens eine Förderflanke gebildet ist, die als zusätzliche Bohrmehltragfläche bzw. Nebenförderschulter wirkt. Durch die Anordnung wenigstens einer weiteren Bohrmehltragfläche in der Bohrmehlnut erfolgt auch in dem Bereich der Bohrmehlnut, welcher von der eigentlichen Bohrmehltragfläche bzw. Hauptförderschulter weiter entfernt ist, eine direkte Förderung bzw. direktes Führen des Bohrmehls durch den Bohrer, so dass eine verlangsamte, zu Verdichtungen führende Bewegung des Bohrmehls in diesem Bereich vermieden ist. Hierdurch ist es möglich den gesamten Querschnitt der Bohrmehlnut zur Förderung des Bohrmehls in optimaler weise zu nutzen, ohne von bewährten Grundformen der Bohrmehlnut Abstand nehmen zu müssen. Somit ist nun ein erhöhter Bohrmehldurchsatz möglich, welcher auch bei der Verwendung moderner Bohrköpfe das Bohrmehl in ausreichendem Maß auch aus tiefen Bohrlöchern fördert und ein insgesamt schnelleres Bohren erlaubt. In anderen Worten ausgedrückt dient wenigstens eine auf der Grundform der Bohrmehlnut angeordnete Verformung bzw. Verwerfung, welche im Querschnitt gesehen eine Erhebung bzw. Rippe oder eine Vertiefung bzw. Nut bildet, mit einem Teil ihrer Oberfläche als Bohrmehltragfläche. Insgesamt steht somit pro Fördervolumen eine größere Bohrmehltragfläche zur Verfügung, welche nicht nur in einem Bereich, sondern in mehreren Bereichen auf das Bohrmehl wirkt und dieses aus dem Bohrloch drängt.

Im Sinne der Erfindung wird unter einer Bohrmehltragfläche bzw. einer Förderfläche jede Fläche der Bohrmehlnut verstanden, welche einen in die Förderrichtung weisenden Flächenanteil aufweist, welcher insbesondere aufgrund seiner Ausrichtung in der Lage ist, auf das Bohrmehl eine Kraft in die Förderrichtung auszuüben. Die Erfindung sieht vor, Erhebungen bzw. Erhöhungen z. B. als Rippen auszubilden und Vertiefungen z. B. als Nuten auszubilden. Die Begriffe Verformung bzw. Verwerfung werden als Überbegriff für die im vorhergehenden Satz genannten Begriffe verwendet.

Eine vorteilhafte Ausbildung des Erfindungsgegenstandes sieht vor, die Verformung als umlaufende Erhöhung oder Vertiefung auszubilden. Hierdurch erfolgt in allen Bereichen der Förderwendel eine gleichbleibende Förderung des Bohrmehls. Alternativ ist es vorgesehen, die Erhöhung oder die Vertiefung abschnittsweise zu unterbrechen. Dies erlaubt bei unerwartet auftretenden Verdichtungen ein Ausweichen des Bohrmehls im Bereich der Unterbrechung, so dass eventuell auftretenden Verdichtungen wirksam vorgebeugt ist.

Eine weitere vorteilhafte Ausbildung des Erfindungsgegenstandes sieht eine Verbreiterung des umlaufenden Stegs zur Achse des Bohrers in Vorschubrichtung und/oder in Förderrichtung vor. Hierdurch wird einem raschen Verschleiß des Stegs entgegengewirkt, da die abzutragende Rückenfläche des Stegs mit zunehmendem Verschleiß größer wird. Dies ist auch in der DE 27 35 227 A1 beschrieben.

Die Erfindung sieht auch vor, den ersten Abschnitt unmittelbar in den zweiten Abschnitt übergehen zu lassen. Hierdurch ist es möglich, den Bereich, in welchem der Bohrer geschwächt ist, klein zu halten.

Durch die Ausbildung eines dritten, achsparallelen Abschnitts zwischen dem ersten Abschnitt und dem zweiten Abschnitt lassen sich besonders Breite Bohrmehlnuten ausbilden.

Eine weitere vorteilhafte Ausbildung des Erfindungsgegenstandes sieht vor, die Erhöhung oder die Vertiefung in den in Förderrichtung oberen zwei Dritteln der Bohrmehlnut anzuordnen. Hierdurch ist es möglich auch in diesem Bereich eine wirksame Förderung zu gewährleisten und ungewünschten Verdichtungen des Bohrmehls vorzubeugen.

Gemäß einer Ausführungsform des Erfindungsgegenstandes ist es vorgesehen, die Erhöhung oder die Vertiefung parallel zum Steg zu führen. Hierdurch ist die Förderwirkung im gesamten Bereich der Förderwendel gleich.

Gemäß einer weiteren Ausführungsform ist insbesondere ein schlangenförmiger oder zickzackförmiger Verlauf der Erhöhung oder der Vertiefung vorgesehen, bei welchem die Erhöhung oder die Vertiefung wechselnde Abstände zum Steg aufweist. Hierdurch wird eine Art Pumpeffekt erzielt, welchen die weitere Bohrmehltragfläche insbesondere auf das in Förderrichtung über ihr liegende Bohrmehl ausübt. Diese Pumpwirkung dient bei bestimmten Bohrmehlzusammensetzungen einer wirksamen Förderung.

Weiterhin sieht die Erfindung vor, die Erhöhung oder die Vertiefung im Querschnitt kreisförmig und/oder rechteckförmig und/oder trapezförmig und/oder elliptisch und/oder sägezahnförmig und/oder in Form einer verkleinerten Bohrmehlnut auszubilden. Derartige Formgebungen lassen sich bei der Herstellung einfach realisieren.

Erfindungsgemäß wird weiter vorgeschlagen, die Erhöhung oder die Vertiefung unterschiedlich hoch auszubilden. Hierdurch ist es möglich die Größe der Bohrmehltragfläche individuell auf das von dieser zu fördernde Bohrmehlvolumen anzupassen.

Eine zweckmäßige Ausgestaltung des Erfindungsgegenstandes sieht vor, die Erhöhung oder die Vertiefung in gleichen Abständen zueinander anzuordnen. Hierdurch ist die Stabilität des Bohrers gleichmäßig beeinflusst.

Weiterhin ist es vorgesehen, die Erhöhung oder die Vertiefung in unterschiedlichen Abständen zueinander anzuordnen. Diese Ausbildung erlaubt es ebenfalls in einzelnen Bereichen der Bohrmehlnut individuell auf das von dieser zu fördernde Bohrmehlvolumen einzugehen.

Die Erfindung sieht auch vor, den zweiten Abschnitt der Bohrmehlnut über einen Absatz in die Deckfläche des Stegs übergehen zu lassen. Hierdurch wird es dem Bohrmehl erschwert, sich zwischen die Deckfläche und die Wand des Bohrlochs zu schieben und dadurch zu einer Erhöhung der Reibung zu führen.

Eine weitere zweckmäßige Ausgestaltung der Erfindung sieht vor, die Stegbreite im Verhältnis zur Steigungshöhe der Förderwendel gering zu halten, wobei die Stegbreite weniger als ein Viertel der Steigungshöhe der Förderwendel beträgt und vorzugsweise etwa einem Sechstel der Steigungshöhe der Förderwendel entspricht. Hierdurch ergibt sich eine geringe Reibung des Bohrers an der Bohrlochwand und damit ein rascher Bohrfortschritt. Da die Querschnittsfläche des Stegs bei der Abnutzung infolge der schräg verlaufenden Bohrmehltragfläche und infolge des schräg verlaufenden Nutbodens zunimmt, verlangsamt sich die Durchmesserabnahme mit zunehmendem Verschleiß.

Schließlich sieht die Erfindung eine kontinuierliche Vergrößerung bzw. Verkleinerung des Kernradius (R_{K1}, R_{K2}, R_{K3} bzw. R_{K4} , R_{K5}, R_{K6}) vor. Hierdurch erhält die Bohrmehlnut einen von Stufen und Absätzen freien Querschnitt.

Weitere Einzelheiten der Erfindung werden in der Zeichnung anhand von schematischen Ausführungsbeispielen beschrieben.

Hierbei zeigt:
- Figur 1a:: einen erfindungsgemäßen Bohrer in Seitenansicht,
- Figur 1b:: eine vergrößerte Darstellung der Förderwendel des in der Figur 1a gezeigten Bohrers,
- Figur 2a bis 2d:: verschiedene Ausführungsformen der Rippe in Schnittdarstellung,
- Figur 3a bis 3d:: verschiedene Anordnungen mehrerer Rippen,
- Figur 4:: eine schematische Ansicht einer Bohrmehlnut,
- Figur 5a:: einen weiteren erfindungsgemäßen Bohrer in Seitenansicht,
- Figur 5b:: eine geschnittene Detailansicht unterschiedlich ausgestalteter Bohrmehlnuten in schematischer Darstellung und

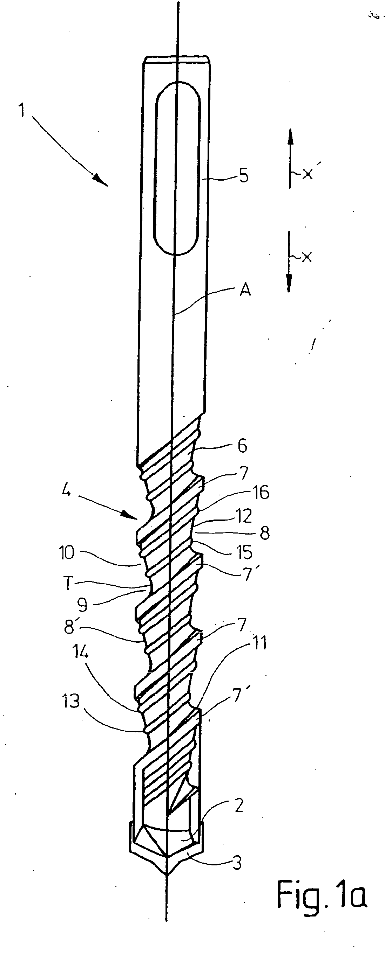

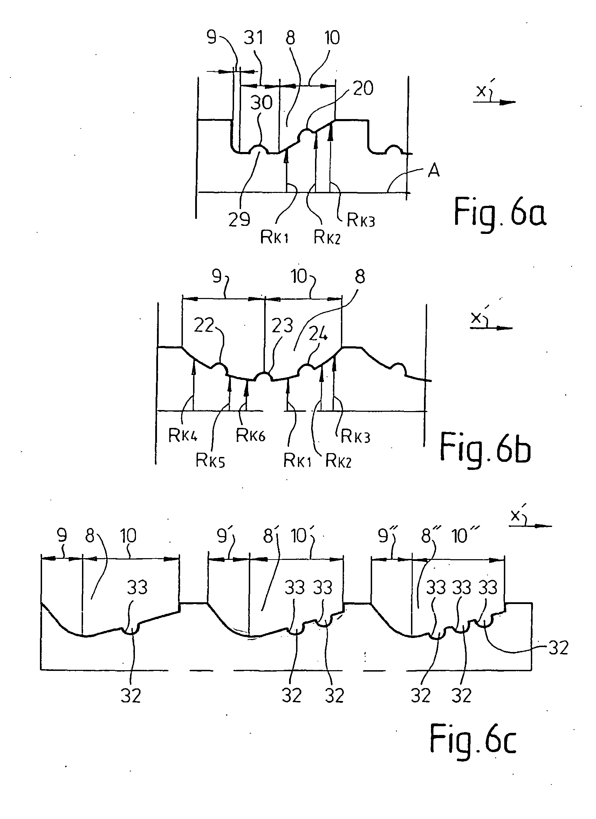

Figur 6a - 6e: geschnittene Detailansichten weiterer Bohrer. Die Figur 1a zeigt eine Seitenansicht eines Bohrers 1 mit einer stirnseitig in einem Bohrerkopf 2 angeordneten Schneidplatte 3, einem Wendelschaft 4 und einem Einspannende 5. Der wendelschaft 4 weist eine spiralförmige, zweigängige Förderwendel 6. auf. Diese ist durch Stege 7, 7' gebildet, welche zwei Bohrmehlnuten 8, 8' begrenzt, die spiralförmig vom Bohrerkopf 2 in die Richtung des Einspannendes 5 verlaufen. Im Betrieb des Bohrers 1 fördern die Bohrmehlnuten 8, 8' Bohrmehl in eine Förderrichtung x' vom Bohrerkopf 2 zum Einspannende 5, wobei der Bohrer 1 in eine Vorschubrichtung x tiefer in ein nicht dargestelltes Bohrloch eindringt. Da die Bohrmehlnuten 8, 8' identisch ausgebildet sind, erfolgt im folgenden in der Regel nur die Betrachtung einer Bohrmehlnut. In der Seitenansicht betrachtet ist die Bohrmehlnut 8 wannenartig ausgebildet und fällt in einem unteren Nutabschnitt 9 vom Steg 7' schräg zu einer Längsachse A des Bohrers 1 bis zu einem Tiefpunkt T ab und steigt von diesem in einem oberen Nutabschnitt 10 wiederum schräg zu der Längsachse A zum Steg 7 hin an. Mit dem unteren Nutabschnitt 9 bildet die Bohrmehlnut eine Bohrmehltragfläche 11, welche das Bohrmehl in die Förderrichtung x' bewegt. Der schräge Verlauf eines Nutbodens 12 im oberen Nutabschnitt 10 gewährleistet eine hohe Belastbarkeit des Bohrers 1 im Bereich der Förderwendel 6, da die Querschnittsveränderungen der Förderwendel 6 ohne Sprünge erfolgen. Der Übergang vom Steg 7 in die Bohrmehlnut 8 bringt somit praktisch keine den Bohrer 1 schwächende Kerbwirkung mit sich. Auf dem Nutboden 12 sind Rippen 13 und 14 angeordnet, welche im oberen Nutabschnitt 10 weitere Bohrmehltragflächen 15 und 16 bilden.

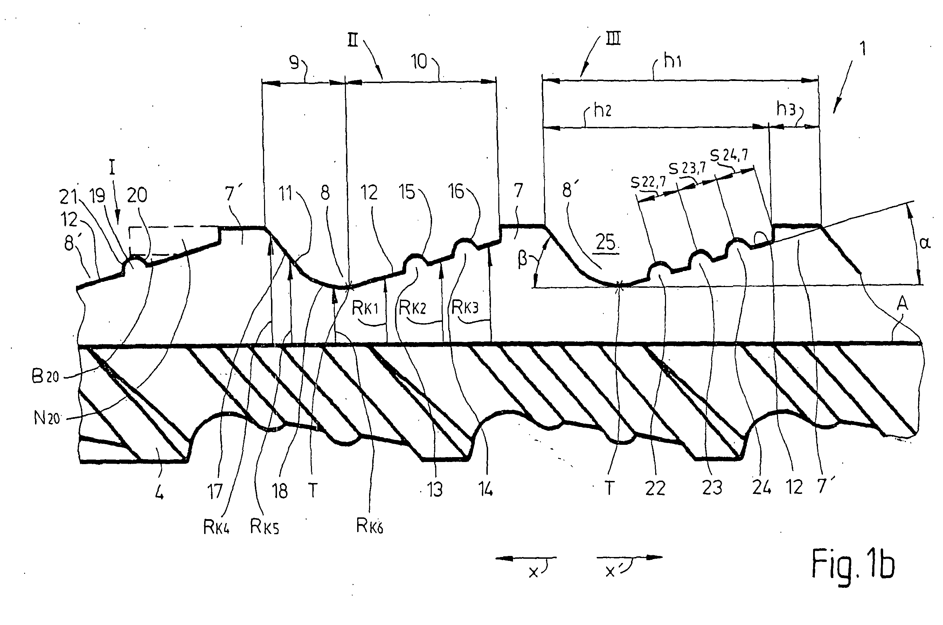

In der Figur 1b ist ein Ausschnitt des in der Figur 1a gezeigten wendelschafts 4 vergrößert dargestellt. Hierbei ist der Wendelschaft 4 in einem über der Längsachse A liegenden Bereich geschnitten dargestellt, wobei auf eine Schraffierung der geschnittenen Fläche verzichtet wurde, um die Übersichtlichkeit der Figur zu erhalten. In dem geschnittenen Bereich ist die Zahl der in der Bohrmehlnut 8 verlaufenden Rippen in Abweichung von der Darstellung in der Figur 1a und in Abweichung vom ungeschnitten dargestellten Bereich von eins bis drei variiert. Die Bohrmehltragfläche 11 fällt in die Förderrichtung x' zunächst als Schräge 17 und anschließende als Kurve 18 unter Abnahme der Kernradien R_{K4} bis R_{K6} kontinuierlich von dem Steg 7' zu dem Tiefpunkt T der Bohrmehlnut 8 ab. Von diesem Tiefpunkt T steigt der Nutboden 12 unter Zunahme von Kernradien R_{K1} bis R_{K3} kontinuierlich zu dem zweiten Steg 7 an. Dieser Anstieg erfolgt in einem parallel zu der Längsachse A gemessenen Winkel α von etwa 15°. Gemäß nicht dargestellter Ausführungsbeispiele sind Winkel zwischen α = 1° und α = 30° vorgesehen. Eine weitere nicht dargestellte Ausführungsvariante sieht im Schnitt einen wenigstens bereichsweise kurvenförmigen Verlauf des Nutbodens 12 im oberen Nutabschnitt 10 vor, wobei der obere Nutabschnitt 10 sich etwa über zwei Drittel einer Steigungshöhe h₂ der Bohrmehlnut 8 erstreckt. Der untere Nutabschnitt 9 erstreckt sich etwa über ein Drittel der Steigungshöhe h₂ der Bohrmehlnut 8. Der obere Nutabschnitt 10 und der untere Nutabschnitt 9 treffen am Tiefpunkt T der Bohrmehlnut 8 aufeinander. Gemäß einer nicht dargestellten Ausführungsvariante ist zwischen dem oberen und dem unteren Nutabschnitt ein mittlerer Nutabschnitt vorgesehen, in welchem der Nutgrund beispielsweise parallel zu der Längsachse A des Bohrers 1 verläuft.

In einem zeichnungsabschnitt I der Figur 1b ist auf dem Nutboden 12 eine Rippe 19 angeordnet, welche eine zusätzliche Bohrmehltragfläche 20 aufweist. Die Bohrmehltragfläche 20 ist durch denjenigen Anteil einer Rippenoberfläche 21 gebildet, welcher in die Förderrichtung x' weist. Da das in der Bohrmehlnut 8 geförderte Bohrmehl bzw. Bohrklein einen Zusammenhalt aufweist, wirkt sich eine Förderung des Bohrmehls, welches in der Förderrichtung x' in einem oberhalb der Bohrmehltragfläche 20 liegenden Bereich B₂₀ liegt, auch auf Bohrmehl aus, welches sich in einem Nachbarbereich N₂₀ befindet.

In einem Zeichnungsabschnitt II der Figur 1b sind die bereits in der Figur 1a gezeigten Rippen 13, 14 auf dem Nutboden 12 angeordnet. Mit ihren Bohrmehltragflächen 15, 16 bewirken die Rippen 13, 14 im oberen Nutabschnitt 10 eine Förderung des Bohrmehls durch eine Kraftübertragung von der Förderwendel 6 auf das Bohrmehl.

In einem Zeichnungsabschnitt III der Figur 1b sind in der Bohrmehlnut 8' drei Rippen 22, 23, 24 angeordnet, welche auf das in der Bohrmehlnut 8' befindliche Bohrmehl einwirken. Die Rippen 22, 23, 24 verlaufen parallel zum Steg 7 und weisen somit gleichbleibende Abstände S_{22,7}, S_{23,7}, S_{24,7} zum Steg 7' bzw. zu benachbarten Rippen auf..Eine nicht dargestellte Ausführungsvariante sieht vor, die Rippen in wechselnden Abständen zum Steg auf dem Nutboden zu führen.

Die Bohrmehlnut 8 bzw. 8' bildet im Querschnitt gesehen über die Steigungshöhe h₂ eine asymmetrische Wanne 25, welche mit der Bohrmehltragfläche 11 in einem Winkel β = 45° bis 90° in die Vorschubrichtung x zum Steg 7' bzw. 7 ansteigt und welche mit dem Nutboden 12 in dem Winkel α = 15° in die Förderrichtung x' zum Steg 7 bzw. 7' ansteigt. Hierbei weist der Nutboden 12 in Umfangsrichtung langgezogene Erhebungen 13, 14, 19, 22, 23, 24 auf, welche zusätzliche Bohrmehltragflächen bilden. Im Schnitt betrachtet ist die Förderwendel 6 zwischen zwei Tiefpunkten T ähnlich dem Querschnitt eines Deichs ausgebildet. Die Bohrmehltragfläche 11 fällt in Förderrichtung x' steil vom Steg 7' bzw. 7 zur Längsachse A ab und der Nutboden 12 steigt in Förderrichtung in einem flacheren Winkel zu dem jeweils zweiten Steg 7 bzw. 7' wieder an, wobei auf dem schräg verlaufenden Nutboden 12 Erhebungen angeordnet sind, welche einen Fördereffekt auf das Bohrmehl ausüben. Eine Stegbreite h₃ ist im Verhältnis zu einer Steigungshöhe h₁ der Förderwendel 6 gering. Insbesondere ist ein Verhältnis h_{1 :} h₃ von 5 : 1 bis 6 1 vorgesehen.

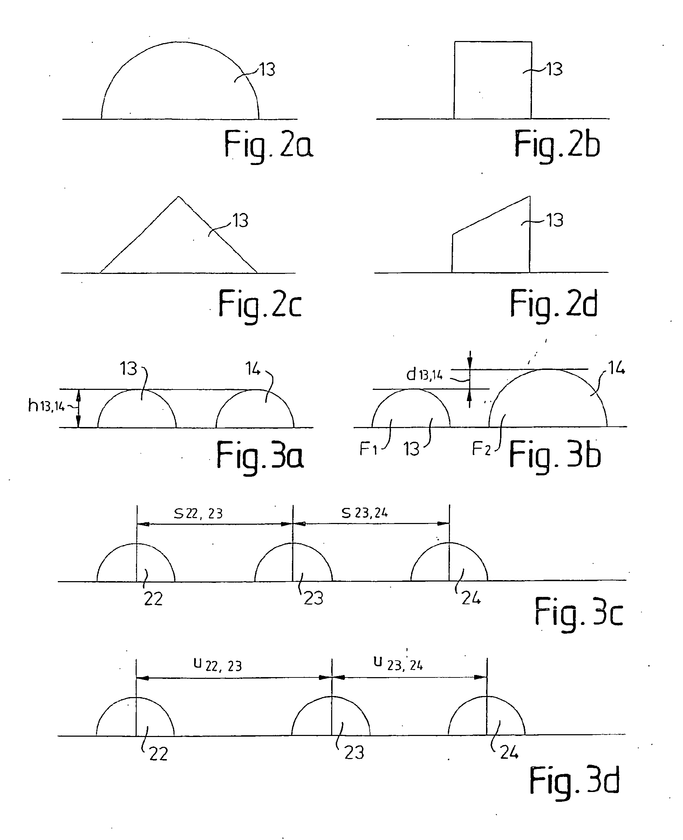

In den Figuren 2a bis 2d sind schematisch verschiedene Ausführungsformen für Rippen dargestellt. Die Figur 2 zeigt eine halbkreisförmige Rippe 13. Diese weist einen besonders geringen Verschleiß auf. In der Figur 2b ist eine rechteckförmige Rippe 13 abgebildet. Die Figur 2c zeigt eine dreieckförmige Rippe 13 und in der Figur 2d ist schließlich noch eine trapezförmige Rippe 13 abgebildet. Gemäß einer nicht dargestellten Ausführungsvariante ist es auch vorgesehen, eine Förderwendel mit mehreren Rippen unterschiedlicher Querschnittsform auszubilden.

Die Figur 3a bis 3d zeigen in schematischer Darstellung unterschiedliche Anordnungen von Rippen. In der Figur 3a sind Rippen 13, 14 gleicher Größe und gleicher Höhe h_{13,14} dargestellt. Die Figur 3b zeigt Rippen 13, 14, welche unterschiedliche Größen bzw. Querschnittsflächen F₁ und F₂ aufweisen. Zwischen den Rippen 13 und 14 besteht weiterhin eine Höhendifferenz d_{13,14}. Die Figur 3c zeigt drei Rippen 22 bis 24 gleicher Größe, welche gleiche Abstände s_{22,23} und s_{23,24} zueinander aufweisen. Die Figur 3d schließlich zeigt drei Rippen 22 bis 24, welche unterschiedliche Abstände u_{22,23} und u_{23,24} zueinander aufweisen. Die unterschiedliche Ausbildung und Anordnung der Rippen erlaubt es den Bohrer auf die speziellen Gegebenheiten anzupassen, um Bohrmehl unterschiedlicher Konsistenz optimal fördern zu können.

Gemäß nicht dargestellter Ausführungsvarianten ist es vorgesehen, die in den Figuren 2a bis 4 dargestellten Erhöhungen in geometrisch entsprechender Form als Vertiefungen in der Bohrmehlnut auszubilden.

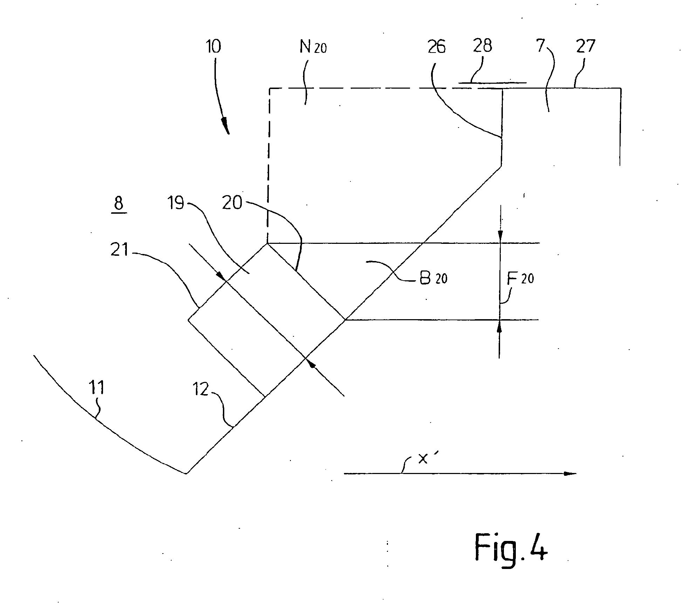

In Figur 4 ist in schematischer Darstellung eine in einem oberen Nutabschnitt 10 angeordnete Rippe 19 abgebildet, welche eine Bohrmehltragfläche 20 aufweist. Von einer Rippenoberfläche 21 wird derjenige Anteil als Bohrmehltragfläche 20 angesehen, welcher eine Projektion in die Förderrichtung x' erlaubt. Mit einer durch die Projektion erzeugten Projektionsfläche F₂₀ wirkt die Rippe 19 dann fördernd auf das Bohrmehl. Hierbei erfolgt die Förderung von Bohrmehl nicht nur in einem in Förderrichtung x' vor der Rippe 19 liegenden Bereich B₂₀, sondern auch in einem durch gestrichelte Linien angedeuteten Nachbarbereich N₂₀. Dieser Mitnahmeeffekt wird durch das Zusammenhaften des Bohrmehls bewirkt.

Der Nutboden 12 der Bohrmehlnut 8 geht über einen Absatz 26 in eine Deckfläche 27 des Stegs 7 über. Die Stufe 26 dient dazu, das Eintreten von Bohrmehl zwischen eine Wand 28 des Bohrlochs und die Deckfläche 27 des Stegs 7 zu erschweren und so einer ungewünschten Erhöhung der Reibung entgegen zu wirken.

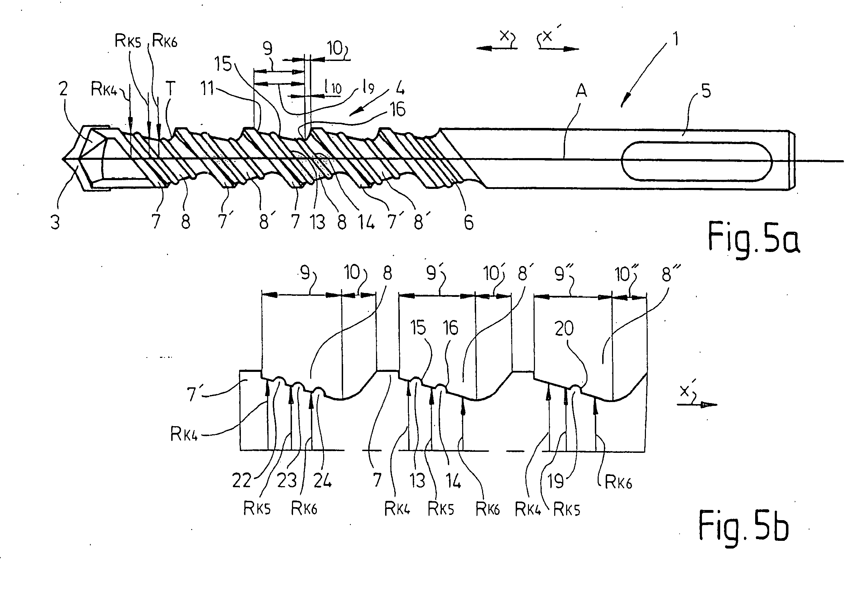

Die Figur 5a zeigt eine Seitenansicht eines weiteren Bohrers 1 mit einer stirnseitig in einem Bohrerkopf 2 angeordneten Schneidplatte 3, einem Wendelschaft 4 und einem Einspannende 5. Der Wendelschaft 4 weist eine spiralförmige, zweigängige Förderwendel 6 auf. Diese ist durch Stege 7, 7' gebildet, welche zwei Bohrmehlnuten 8, 8' begrenzt, die spiralförmig vom Bohrerkopf 2 in die Richtung des Einspannendes 5 verlaufen. Im Betrieb des Bohrers 1 fördern die Bohrmehlnuten 8, 8' Bohrmehl in eine Förderrichtung x' vom Bohrerkopf 2 zum Einspannende 5, wobei der Bohrer 1 in eine Vorschubrichtung x tiefer in ein nicht dargestelltes Bohrloch eindringt. Da die Bohrmehlnuten 8, 8' identisch ausgebildet sind, erfolgt im folgenden in der Regel nur die Betrachtung einer Bohrmehlnut. In der Seitenansicht betrachtet ist die Bohrmehlnut 8 wannenartig ausgebildet und fällt in einem unteren Nutabschnitt 9 vom Steg 7 schräg zu einer Längsachse A des Bohrers 1 bis zu einem Tiefpunkt T ab und steigt in einem oberen Nutabschnitt 10 vom Tiefpunkt T wiederum schräg zu der Längsachse A zum Steg 7' hin an. Im unteren Nutabschnitt 9 weist die Bohrmehlnut eine Bohrmehltragfläche 11 auf, welche das Bohrmehl in die Förderrichtung x' bewegt. Im Nutabschnitt 9, in welchem sich der Kernradius R_{K4}, R_{K5} , R_{K6} kontinuierlich verkleinert, weist die Bohrmehlnut 8 weiterhin Rippen 13 und 14 auf, welche Erhöhungen bilden. Die Rippen 13 und 14 bilden im ersten Nutabschnitt 9 weitere Bohrmehltragflächen 15 und 16 und erhöhen somit die Förderfähigkeit des ersten Nutabschnitts 9. Der zweite Nutabschnitt 10 ist gegenüber dem ersten Nutabschnitt 9 klein gehalten, wobei hier gilt l₁₀ > 0,2 x l₉.

In der Figur 5b sind schematisch und in geschnittener Detailansicht unterschiedlich ausgestaltete Bohrmehlnuten 8, 8', 8" gezeigt, welche prinzipiell dem Aufbau der in der Figur 5a gezeigten Bohrmehlnuten entsprechen. Die Bohrmehlnut 8 liegt zwischen Stegen 7' und 7 und weist in einem auf einen ersten Abschnitt 9, auf den ein zweiter Abschnitt 10 folgt, drei Rippen 22, 23, 24 auf, welche beim Transport von Bohrmehl in eine Förderrichtung x' einem Zurückrutschen des Bohrmehls mit Bohrmehltragflächen entgegen wirken. Die Bohrmehlnut 8' weist in einem auf einen ersten Abschnitt 9', auf den ein zweiter Abschnitt 10' folgt, zwei Rippen 13, 14 mit Bohrmehltragflächen 15, 16 auf. Die Bohrmehlnut 8" weist in einem auf einen ersten Abschnitt 9", auf den ein Abschnitt 10" folgt, eine Rippe 19 mit einer Bohrmehltragfläche 20 auf. Analog zu der Ausgestaltung des in der Figur 5a gezeigten Bohrers nimmt im Bereich des ersten Abschnitts 9, 9', 9'' der Kernradius R_{K4}, R_{K5,} R_{K6} der Bohrmehlnuten 8, 8', 8" in die Förderrichtung x' ab, so dass gilt: R_{K4} > R_{K5} > R_{K6}.

In den Figuren 6a bis 6e sind in schematischer Schnittansicht drei weitere Ausführungsformen für Bohrmehlnuten dargestellt. Alle Bohrmehlnuten weisen zweite Abschnitte auf, in welchen der Kernradius der Bohrmehlnut in die Förderrichtung x' stetig zunimmt, so dass gilt: R_{K1} > R_{K2} > R_{K3}.

In der Figur 6a ist eine Bohrmehlnut 8 dargestellt, welche in zwischen einem ersten Abschnitt 9 und einem zweiten Abschnitt 10 einen dritten Abschnitt 31 aufweist, welcher parallel zu einer Längsachse A verläuft. Auf dem dritten Abschnitt 31 ist eine Rippe 29 angeordnet, welche im Abschnitt 9 eine zusätzliche Bohrmehltragfläche 30 bildet. In dem zweiten Abschnitt 10 ist eine Rippe 19 angeordnet, welche durch ihre Bohrmehltragfläche 20 das Bohrmehl in die Förderrichtung x' schiebt.

In der Figur 6b ist eine Bohrmehlnut 8 dargestellt, welche einen ersten Abschnitt 9 aufweist, der direkt in einen zweiten Abschnitt 10 übergeht. In dem ersten Abschnitt 9 nimmt der Kernradius der Bohrmehlnut 8 in die Förderrichtung x' stetig ab, so dass gilt: R_{K4} > R_{K5} > R_{K6}. Zusammen weisen die beiden Abschnitte 9 und 10 drei Rippen 22, 23 und 24 auf, wobei die Rippe 23 in einem Übergangsbereich liegt, in welchem der Bereich 9 in den Bereich 10 übergeht.

In der Figur 6c sind drei unterschiedlich gestaltete Bohrmehlnuten 8, 8' und 8" dargestellt. Diese weisen im Unterschied zu allen vorhergehenden Figuren in ihren zweiten Abschnitten 10, 10' und 10" Verformungen auf, welche durch im Querschnitt halbkreisförmige Nuten 32 gebildet sind. Alle Nuten 32 bilden Bohrmehltragflächen 33, welche den Transport des Bohrmehls in die Transportrichtung x' unterstützen. In ersten Abschnitten 9, 9' und 9" sind die drei Bohrmehlnuten identisch ausgebildet.

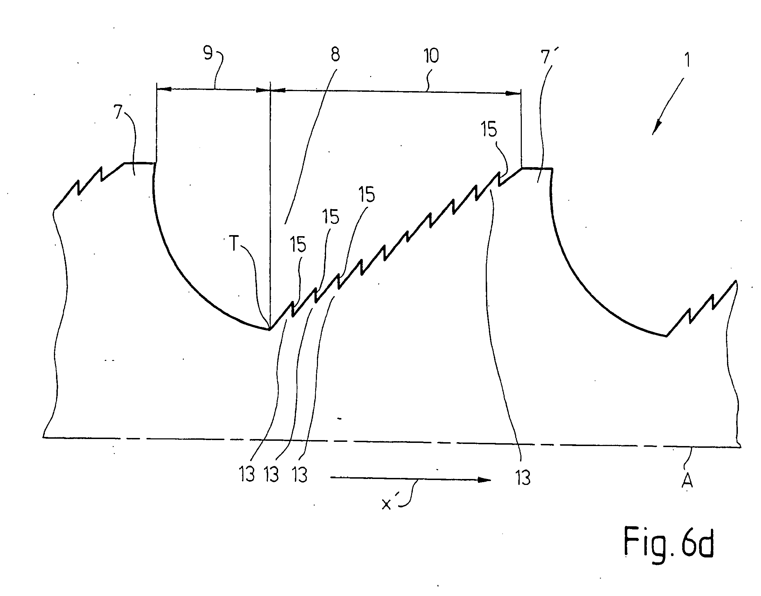

In der Figur 6d ist ein Ausschnitt eines Bohrers 1 in Schnittansicht dargestellt, welcher eine aus zwei Abschnitten 9 und 10 bestehende Bohrmehlnut 8 aufweist, welche zwischen Stegen 7, 7' ausgebildet ist. In dem ersten Abschnitt 10 fällt die Bohrmehlnut 8 bogenförmig zu einem Tiefpunkt T ab und steigt von diesem relativ zu einer Längsachse A des Bohrers 1 gesehen wieder bis zum Steg 7' an. Im Abschnitt 10 weist die Bohrmehlmut zehn Rippen 13 auf, welche der Bohrmehlnut 8 im Schnitt ein sägezahnähnliches Profil verleihen, das zehn Förderflanken 15 aufweist.

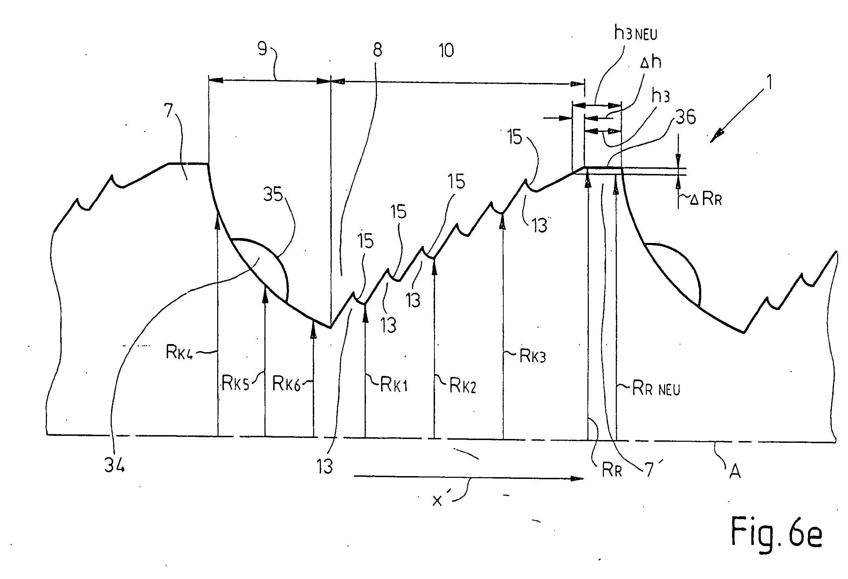

In der Figur 6e ist ein Ausschnitt eines weiteren Bohrers 1 in Schnittansicht dargestellt, welcher eine aus zwei Abschnitten 9 und 10 bestehende Bohrmehlnut 8 aufweist, welche zwischen Stegen 7, 7' ausgebildet ist. Im ersten Abschnitt 9, in welchem die Kernradien R_{K4}, R_{K5}, R_{K6} in eine Förderrichtung x' abnehmen, sind gemäß einer Ausführungsvariante kugelförmige Erhebungen 34 mit Bohrmehltragflächen 35 angeordnet. Diese sind auf einer gedachten Linie, welche parallel zu der Rippe 7 verläuft mit Abständen angeordnet. Im zweiten Abschnitt 10, in welchem die Kernradien R_{K1} , R_{K2} , R_{K3} in eine Förderrichtung x' zunehmen sind sechs Rippen 13 angeordnet, welche jeweils eine Bohrmehltragfläche 15 aufweisen, mit welcher Bohrmehl in die Förderrichtung x' geschoben wird. Die Rippen 13 sind etwa analog zu der Bohrmehlnut 8 ausgebildet und bilden Miniaturnuten. Der Steg 7' weist eine Stegbreite h₃ auf. Eine Abnutzung des Rückens 36 des Stegs 7' durch den Bohrbetrieb führt zu einer Verkleinerung eines Rückenradius R_{R} des Stegs 7' um ΔR_{R} auf einen verkleinerten Rückenradius R_{RNEU}. Gleichzeitig führt die Verkleinerung des Rückenradius R_{R} aber auch zu einer Vergrößerung der Stegbreite h₃ um Δh auf die neue Stegbreite h_{3NEU}. Durch die zunehmende Breite des Stegs 7' verlangsamt sich deren Verschleiß, da mit zunehmender Abnahme des Rückenradius R_{R} immer mehr Material abgetragen werden muss.

Die Erfindung ist nicht auf dargestellte oder beschrieben Ausführungsbeispiele beschränkt. Sie umfasst vielmehr Weiterbildungen der Erfindung im Rahmen der Schutzrechtsansprüche.

### Bezugszeichenliste:

- 1: Bohrer
- 2: Bohrerkopf
- 3: Schneidplatte
- 4: Wendelschaft
- 5: Einspannende von 1
- 6: Förderwendel
- 7, 7': Steg
- 8, 8', 8": Bohrmehlnut
- 9, 9', 9": unterer Nutabschnitt bzw. erster Abschnitt von 8
- 10, 10', 10": oberer Nutabschnitt bzw. zweiter Abschnitt von 8
- 11: Bohrmehltragfläche
- 12: Nutboden
- 13: Rippe
- 14: Rippe
- 15: Bohrmehltragfläche von 13
- 16: Bohrmehltragfläche von 14
- 17: Schräge
- 18: Kurve
- 19: Rippe
- 20: Bohrmehltragfläche von 19
- 21: Rippenoberfläche von 19
- 22 - 24: Rippe
- 25: Wanne
- 26: Absatz
- 27: Deckfläche von 7
- 28: Bohrlochwand
- 29: Rippe
- 30: Bohrmehltragfläche von 29
- 31: dritter Nutabschnitt
- 32: Nut
- 33: Bohrmehltragfläche von 32
- 34: kugelförmige Erhebung
- 35: Bohrmehltragfläche von 34
- 36: Rücken von 7 bzw. 7'

- x': Förderrichtung
- x: Vorschubrichtung
- A: Längsachse von 1
- F₁, F₂: Querschnittsfläche von 13 bzw. 14
- T: Tiefpunkt von 8
- h₁: Steigungshöhe von 6
- h₂: Steigungshöhe von 8
- B₂₀: Bereich oberhalb von 20
- N₂₀: Nachbarbereich von B20
- h₃: Steghöhe von 7 bzw. Stegbreite
- h_{3NEU}: vergrößerte Stegbreite von 7 bzw. 7'
- Δh: Differenz zwischen h₃ und h_{3NEU}
- d_{13,14}: Höhendifferenz 13, 14
- h_{13,14}: Höhe von 13, 14
- l₉, l₁₀: Länge von 9 bzw. 10
- s_{22,23}: Abstand 22, 23
- s_{23,24}: Abstand 23, 24
- F₂₀: Projektionsfläche von 20
- R_{K1} - R_{K3}: erster bis dritter Kernradius
- R_{K4} - R_{K6}: fünfter bis sechster Kernradius
- R_{R}: Rückenradius von 7 bzw. 7'
- R_{RNEU}: verkleinerter Rückenradius von 7 bzw. 7'
- ΔR: Differenz zwischen R_{R} und R_{RNEU}
- s_{22,7}: Abstand 22, 7
- s_{23,7}: Abstand 23, 7
- s_{24,7}: Abstand 24, 7

## Patentansprüche

1. Bohrer (1), insbesondere für Drehschlag- und Hammerbohrmaschinen, mit einem Bohrerkopf (2), einem ein- oder mehrgängigen Wendelschaft (4) mit mindestens einer Bohrmehlnut (8) und einem Einspannende (5), wobei die Bohrmehlnut (8) in Axialrichtung von wenigstens einem wendelförmig um die Achse (A) des Bohrers (1) umlaufenden Steg (7) begrenzt ist, wobei die Bohrmehlnut wenigstens einen ersten Abschnitt (9) aufweist, in welchem sich der Kernradius (R_{K4}, R_{K5}, R_{K6}) des Bohrers (1) in Richtung des Einspannendes (5) verkleinert und wobei die Bohrmehlnut (8) mindestens einen zweiten Abschnitt (10) aufweist, in welchem sich der Kernradius (R_{K1}, R_{K2}, R_{K3}) des Bohrers (1) in Richtung des Einspannendes (5) vergrößert, wobei wenigstens einer der Abschnitte (9, 10) der Bohrmehlnut (8) wenigstens eine als Erhöhung (13, 14; 19; 22, 23, 24) und/oder wenigstens eine als Vertiefung (32) ausgebildete Verformung (13, 14; 19; 22, 23, 24; 32; 34) als Zusatzförderwendel aufweist, welche wenigstens eine als zusätzliche Bohrmehltragfläche (15, 16; 20; 33) ausgebildete Förderflanke (15, 16; 20; 33) für Bohrmehl bildet, wobei wenigstens zwei Verformungen (13, 14; 19; 22, 23, 24; 32; 34) vorgesehen sind, deren Querschnittsflächen (F₁, F₂) unterschiedliche Größen aufweisen.

2. Bohrer nach Anspruch 1, **dadurch gekennzeichnet, dass** die Verformung (13, 14; 19; 22, 23, 24; 32; 34) umlaufend oder unterbrochen ausgebildet ist.

3. Bohrer nach einem der vorhergehenden Ansprüche, **dadurch gekennzeichnet, dass** sich der umlaufende Steg (7) zur Achse (A) des Bohrers (1) in eine Vorschubrichtung (x) und/oder in eine Förderrichtung (x') verbreitert.

4. Bohrer nach einem der vorhergehenden Ansprüche, **dadurch gekennzeichnet, dass** der erste Abschnitt (9) unmittelbar in den zweiten Abschnitt (10) übergeht.

5. Bohrer nach einem der vorhergehenden Ansprüche, **dadurch gekennzeichnet, dass** wenigstens ein dritter Abschnitt (31), welcher parallel zur Achse (A) verläuft, zwischen dem ersten Abschnitt (9) und dem zweite Abschnitt (10) liegt.

6. Bohrer nach einem der vorhergehenden Ansprüche, **dadurch gekennzeichnet, dass** die Verformung (13, 14; 19; 22, 23, 24; 32; 34) in den in Förderrichtung (x') oberen zwei Dritteln der Bohrmehlnut (8) angeordnet ist.

7. Bohrer nach einem der vorhergehenden Ansprüche, **dadurch gekennzeichnet, dass** die Verformung (13, 14; 19; 22, 23, 24; 32; 34) parallel zum Steg (7) verläuft.

8. Bohrer nach einem der vorhergehenden Ansprüche, **dadurch gekennzeichnet, dass** die Verformung (13, 14; 19; 22, 23, 24; 32; 34) mit wechselnden Abständen, insbesondere schlangenförmige oder zickzackförmig zum Steg (7) verläuft.

9. Bohrer nach einem der vorhergehenden Ansprüche, **dadurch gekennzeichnet, dass** die Verformung (13, 14; 19; 22, 23, 24; 32; 34) als Rippe (13, 14; 19; 22, 23, 24) oder als Nut (32) ausgebildet ist.

10. Bohrer nach einem der vorhergehenden Ansprüche, **dadurch gekennzeichnet, dass** die Verformung (13, 14; 19; 22, 23, 24; 32; 34) im Querschnitt kreisförmig und/oder rechteckförmig und/oder trapezförmig und/oder elliptisch und/oder sägezahnförmig und/oder in Form einer verkleinerten Bohrmehlnut ausgebildet ist.

11. Bohrer nach einem der vorhergehenden Ansprüche, **dadurch gekennzeichnet, dass** wenigstens drei Verformungen (22, 23, 24) vorgesehen sind, die vorzugsweise gleiche Abstände (S_{22,23}, S_{23,24}) zueinander aufweisen.

12. Bohrer nach einem der vorhergehenden Ansprüche, **dadurch gekennzeichnet, dass** wenigstens drei Verformungen (22, 23, 24) vorgesehen sind, die vorzugsweise unterschiedliche Abstände (u_{22,23}, u_{23,24}) zueinander aufweisen.

13. Bohrer nach einem der vorhergehenden Ansprüche, **dadurch gekennzeichnet, dass** der zweite Abschnitt (10) der Bohrmehlnut (8) unter Ausbildung einer Stufe (26) in die Deckfläche (27) des Stegs (7) übergeht.

14. Bohrer nach einem der vorhergehenden Ansprüche, **dadurch gekennzeichnet, dass** eine Steghöhe (h₃) des Stegs (7) höchstens ein Viertel und insbesondere ein Sechstel einer Steigungshöhe (h₁) der Förderwendel (6) beträgt.

15. Bohrer nach einem der vorhergehenden Ansprüche, **dadurch gekennzeichnet, dass** die Vergrößerung bzw. Verkleinerung des Kernradius (R_{K1}, R_{K2}, R_{K3}; R_{K4}, R_{K5}, R_{K6}) kontinuierlich erfolgt.

16. Bohrer nach einem der vorhergehenden Ansprüche, **dadurch gekennzeichnet, dass** der erste Abschnitt (9) und der zweite Abschnitt (10) an einem Tiefpunkt (T) der Bohrmehlnut (8, 8') ineinander übergehen.

## Claims

1. Drill (1), in particular for rotary percussion and hammer drilling machines, comprising a drill head (2), a single- or multi-start helical shank (4) with at least one drillings flute (8), and a clamping end (5), wherein the drillings flute (8) is defined in the axial direction by at least one web (7) helically encircling the axis (A) of the drill (1), wherein the drillings flute has at least one first section (9) in which the core radius (R_{K4}, R_{K5}, R_{K6}) of the drill (1) decreases in the direction of the clamping end (5) and wherein the drillings flute (8) has at least one second section (10) in which the core radius (R_{K1}, R_{K2}, R_{K3}) of the drill (1) increases in the direction of the clamping end (5), wherein at least one of the sections (9, 10) of the drillings flute (8) has as an additional conveying helix at least one deformation (13, 14; 19; 22, 23, 24; 32; 34) designed as a prominence (13, 14; 19; 22, 23, 24) and/or at least one deformation (13, 14; 19; 22, 23, 24; 32, 34) designed as a recess (32), which additional conveying helix forms at least one conveying flank (15, 16; 20; 33), designed as an additional drillings supporting surface (15, 16; 20; 33), for drillings, wherein at least two deformations (13, 14; 19; 22, 23, 24; 32; 34) are provided, the cross-sectional areas (F₁, F₂) of which have different sizes.

2. Drill according to Claim 1, **characterized in that** the deformation (13, 14; 19; 22, 23, 24; 32; 34) is designed to be encircling or discontinuous.

3. Drill according to either of the preceding claims, **characterized in that** the encircling web (7) widens relative to the axis (A) of the drill (1) in a feed direction (x) and/or in a conveying direction (x').

4. Drill according to one of the preceding claims, **characterized in that** the first section (9) merges directly into the second section (10).

5. Drill according to one of the preceding claims, **characterized in that** at least one third section (31), which runs parallel to the axis (A), lies between the first section (9) and the second section (10).

6. Drill according to one of the preceding claims, **characterized in that** the deformation (13, 14; 19; 22, 23, 24; 32; 34) is arranged in the top two thirds of the drillings flute (8) in the conveying direction (x').

7. Drill according to one of the preceding claims, **characterized in that** the deformation (13, 14; 19; 22, 23, 24; 32; 34) runs parallel to the web (7).

8. Drill according to one of the preceding claims, **characterized in that** the deformation (13, 14; 19; 22, 23, 24; 32; 34) runs at alternating distances, in particular in a serpentine or zigzag shape, from the web (7).

9. Drill according to one of the preceding claims, **characterized in that** the deformation (13, 14; 19; 22, 23, 24; 32; 34) is designed as a rib (13, 14; 19; 22, 23, 24) or as a groove (32).

10. Drill according to one of the preceding claims, **characterized in that** the cross section of the deformation (13, 14; 19; 22, 23, 24; 32; 34) is designed to be circular and/or rectangular and/or trapezoidal and/or elliptical and/or in a saw-tooth shape and/or in the shape of a reduced drillings flute.

11. Drill according to one of the preceding claims, **characterized in that** at least three deformations (22, 23, 24) are provided which are preferably at the same distances (S₂₂, ₂₃, S₂₃, ₂₄) from one another.

12. Drill according to one of the preceding claims, **characterized in that** at least three deformations (22, 23, 24) are provided which are preferably at different distances (U₂₂, ₂₃, U₂₃, ₂₄) from one another.

13. Drill according to one of the preceding claims, **characterized in that** the second section (10) of the drillings flute (8) merges into the top surface (27) of the web (7) while forming a step (26).

14. Drill according to one of the preceding claims, **characterized in that** a web width (h₃) of the web (7) is at most one quarter and in particular one sixth of a pitch (h₁) of the conveying helix (6).

15. Drill according to one of the preceding claims, **characterized in that** the increase or the decrease in the core radius (R_{K1}, R_{K2}, R_{K3}; R_{K4}, R_{K5}, R_{K6}) is effected continuously.

16. Drill according to one of the preceding claims, **characterized in that** the first section (9) and the second section (10) merge into one another at a low point (T) of the drillings flute (8, 8').

## Revendications

1. Foret (1), notamment pour machines de forage par roto-percussion ou martelage, comprenant une tête de foret (2), une tige filetée à un ou plusieurs pas (4) avec au moins une rainure pour débris de forage (8) et une extrémité de serrage (5), la rainure pour débris de forage (8) étant limitée dans la direction axiale par au moins une nervure (7) de forme hélicoïdale tournant autour de l'axe (A) du foret (1), la rainure pour débris de forage présentant au moins une première portion (9) dans laquelle le rayon du noyau (R_{K4}, R_{K5}, R_{K6}) du foret (1) se rétrécit dans la direction de l'extrémité de serrage (5), la rainure pour débris de forage (8) présentant au moins une deuxième portion (10) dans laquelle le rayon du noyau (R_{K1}, R_{K2}, R_{K3}) du foret (1) augmente dans la direction de l'extrémité de serrage (5), au moins l'une des portions (9, 10) de la rainure pour débris de forage (8) présentant au moins une déformation (13, 14 ; 19 ; 22, 23, 24 ; 32 ; 34) servant de vis d'alimentation supplémentaire et réalisée sous forme de rehaussement (13, 14 ; 19 ; 22, 23, 24) et/ou sous forme de renfoncement (32), qui forme au moins un flanc d'avance (15, 16 ; 20 ; 33) pour les débris de forage, réalisé sous forme de surface de support supplémentaire (15, 16 ; 20 ; 33) pour les débris de forage, au moins deux déformations (13, 14 ; 19 ; 22, 23, 24 ; 32 ; 34) étant prévues, dont les surfaces en section transversale (F₁, F₂) présentent des dimensions différentes.

2. Foret selon la revendication 1, **caractérisé en ce que** la déformation (13, 14 ; 19 ; 22, 23, 24 ; 32 ; 34) est réalisée sur tout le pourtour ou de manière interrompue.

3. Foret selon l'une quelconque des revendications précédentes, **caractérisé en ce que** la nervure périphérique (7) s'élargit par rapport à l'axe (A) du foret (1) dans une direction d'avance (x) et/ou dans une direction de transport (x').

4. Foret selon l'une quelconque des revendications précédentes, **caractérisé en ce que** la première portion (9) se prolonge directement par la deuxième portion (10).

5. Foret selon l'une quelconque des revendications précédentes, **caractérisé en ce qu'**au moins une troisième portion (31), qui s'étend parallèlement à l'axe (A), se situe entre la première portion (9) et la deuxième portion (10).

6. Foret selon l'une quelconque des revendications précédentes, **caractérisé en ce que** la déformation (13, 14 ; 19 ; 22, 23, 24 ; 32 ; 34) est disposée dans les deux tiers supérieurs, dans la direction de transport (x'), de la rainure pour débris de forage (8).

7. Foret selon l'une quelconque des revendications précédentes, **caractérisé en ce que** la déformation (13, 14 ; 19 ; 22, 23, 24 ; 32 ; 34) s'étend parallèlement à la nervure (7).

8. Foret selon l'une quelconque des revendications précédentes, **caractérisé en ce que** la déformation (13, 14 ; 19 ; 22, 23, 24 ; 32 ; 34) s'étend suivant des intervalles alternés, notamment en forme de serpentin ou de zigzag vers la nervure (7).

9. Foret selon l'une quelconque des revendications précédentes, **caractérisé en ce que** la déformation (13, 14 ; 19 ; 22, 23, 24 ; 32 ; 34) est réalisée sous forme de crête (13, 14 ; 19 ; 22, 23, 24) ou sous forme de rainure (32).

10. Foret selon l'une quelconque des revendications précédentes, **caractérisé en ce que** la déformation (13, 14 ; 19 ; 22, 23, 24 ; 32 ; 34) est réalisée en section transversale sous forme circulaire et/ou rectangulaire et/ou trapézoïdale et/ou elliptique et/ou en dents de scie et/ou sous forme de rainure réduite pour débris de forage.

11. Foret selon l'une quelconque des revendications précédentes, **caractérisé en ce qu'**au moins trois déformations (22, 23, 24) sont prévues, lesquelles présentent de préférence des espacements identiques (s_{22,23}, s_{23,24}) les unes des autres.

12. Foret selon l'une quelconque des revendications précédentes, **caractérisé en ce qu'**au moins trois déformations (22, 23, 24) sont prévues, lesquelles présentent de préférence des espacements différents (u_{22,23}, u_{23,24}) les unes des autres.

13. Foret selon l'une quelconque des revendications précédentes, **caractérisé en ce que** la deuxième portion (10) de la rainure pour débris de forage (8) se prolonge par la surface de recouvrement (27) de la nervure (7) en formant un gradin (26).

14. Foret selon l'une quelconque des revendications précédentes, **caractérisé en ce qu'**une hauteur de nervure (h₃) de la nervure (7) vaut au maximum un quart et notamment un sixième d'une hauteur de pas (h₁) de la vis d'alimentation (6).

15. Foret selon l'une quelconque des revendications précédentes, **caractérisé en ce que** l'augmentation ou la réduction du rayon du noyau (R_{K1}, R_{K2}, R_{K3} ; R_{K4}, R_{K5}, R_{K6}) s'effectue en continu.

16. Foret selon l'une quelconque des revendications précédentes, **caractérisé en ce que** la première portion (9) et la deuxième portion (10) se prolongent l'une dans l'autre au niveau d'un point dans la profondeur (T) de la rainure pour débris de forage (8, 8').
